# FASCICULE DE BREVET EUROPEEN

(11) **EP 2 088 290 B1**
(45) Date de publication et mention de la délivrance du brevet: **11.04.2012**
(21) Numéro de dépôt: 08168910.1
(22) Date de dépôt: 12.11.2008
(51) Int. Cl.: F01D 21/04

(54) **Panneau de support d'abradable dans une turbomachine**
Versteifender Gehäuseabreibbelag in einem Turbotriebwerk
Supporting abradable casing liner in a turbomachine

(30) Priorité: 14.12.2007 FR 0708712
(43) Date de publication de la demande: 12.08.2009
(73) Titulaire: Snecma, 75015 Paris (FR)
(72) Inventeur: Marlin, François, 77760 Villiers sous Grez (FR); Verseux, Philippe, 91210 Draveil (FR)
(74) Mandataire: Ramey, Daniel

(56) Documents cités:
- EP-A- 0 184 962
- FR-A- 2 663 412
- GB-A- 2 407 344
- US-A- 5 344 280

## Description

L'invention se rapporte à un panneau supportant une couche de matière d'abradable ainsi qu'à une turbomachine comportant de tels panneaux.

Une turbomachine à double flux comprend une roue de soufflante à son extrémité amont, qui porte une pluralité d'aubes et qui tourne dans un carter de soufflante. Un cône agencé en amont de la roue de soufflante permet d'orienter le flux d'air entrant à travers les aubes de la soufflante. Pour éviter une circulation d'air en sommet d'aubes qui diminuerait le rendement de la turbomachine, un revêtement en matière abradable est disposé au droit des aubes de la soufflante et est porté par la face radialement interne du carter de soufflante.

Lors du fonctionnement en vol de la turbomachine, du givre se forme à la surface du cône et au niveau des extrémités radialement internes des pales des aubes. Sous l'effet de la force centrifuge, des morceaux de glace sont éjectés et entrent alors en collision avec la partie du carter de soufflante située en aval de l'abradable.

Pour éviter d'endommager la paroi interne du carter de soufflante en aval de l'abradable, des panneaux en fibres de verre supportés par des plots amortissants sont fixés au carter de soufflante. Ces panneaux de protection comprennent un empilement de plusieurs nappes de fibres de verre et sont reliés en aval à des panneaux d'insonorisation.

L'utilisation de panneaux de protection impose cependant de réduire l'étendue axiale des panneaux d'insonorisation, ce qui contribue à augmenter le niveau sonore émis par la turbomachine alors qu'il serait souhaitable de le réduire. De plus, les panneaux de protection doivent être réalisés d'un bloc avec les panneaux d'insonorisation, ce qui complique leur fabrication et augmente leur coût. Enfin, en maintenance, le remplacement d'un panneau de protection impose le remplacement du panneau d'insonorisation qui en est solidaire, ce qui augmente de manière importante les coûts car les panneaux d'insonorisation sont des éléments difficiles à fabriquer et donc coûteux.

Un panneau de support d'abordable est divulgué dans le document EP 0 184 962.

A l'heure actuelle les aubes à large corde, c'est-à-dire les aubes à section incurvée, sont préférées aux aubes droites car elles permettent du fait de leur forme aérodynamique plus évoluée, d'améliorer le rendement de la soufflante et surtout de mieux résister aux impacts en vol de corps étrangers, tel que par exemple des volatils.

Cependant, la forme particulière de ces aubes conduit à un allongement de la zone d'impact de glace vers l'amont, sur l'abradable situé au droit de l'aube de soufflante. En effet, pour ce type d'aube, la zone d'impact commence environ aux deux tiers de la dimension axiale de l'abradable et se termine en aval de l'aube. Ainsi, les panneaux de protection couramment utilisés pour les aubes droites ne s'avèrent pas adaptés pour une soufflante à aubes à large corde afin de protéger l'intégralité de la partie du carter soumise aux impacts de glace.

L'invention a notamment pour but d'apporter une solution simple, économique et efficace à ces différents problèmes.

Elle propose à cet effet un panneau de support d'abradable de turboréacteur, comprenant un support rigide destiné à être fixé sur une paroi interne d'un carter de soufflante et dont une face est recouverte d'une structure stratifiée portant une couche de matière abradable, cette structure stratifiée comprenant des nappes de fibres noyés dans un polymère, caractérisé en ce que la structure stratifiée comprend une première partie ou partie amont recouverte par l'abradable et une seconde partie ou partie aval qui s'étend au-delà de l'abradable, l'épaisseur de la partie aval étant supérieure à celle de la partie amont et étant susceptible de résister à des impacts de glace.

Ainsi, c'est le panneau portant l'abradable qui porte la partie aval de protection et non plus les panneaux d'insonorisation disposés en aval. La dissociation des panneaux de protection et d'insonorisation permet de simplifier la fabrication des panneaux de protection, et de limiter le coût des opérations de maintenance puisque le remplacement de la partie aval stratifiée n'impose plus nécessairement le remplacement des panneaux d'insonorisation.

Selon une autre caractéristique de l'invention, la partie amont de la structure stratifiée est d'épaisseur constante sur une majeure partie de sa longueur, et est reliée à la partie aval par une zone dont l'épaisseur augmente progressivement vers l'aval. L'augmentation de cette épaisseur permet de protéger la majeure partie du carter soumise aux impacts de glace.

La partie amont de la structure stratifiée qui est d'épaisseur constante s'étend sur environ les deux tiers de la dimension axiale de l'abradable.

Le support rigide est préférentiellement à structure alvéolaire et peut comprendre deux étages superposés également à structure alvéolaire, séparés par une plaque.

Cette structure alvéolaire s'avère particulièrement intéressante car elle est légère et facilement remplaçable lors d'une opération de maintenance. De plus, elle présente également l'avantage de répartir sur une surface importante l'énergie libérée par un impact de glace sur la structure stratifiée, ce qui permet d'augmenter la durée de vie de l'ensemble du panneau de support d'abradable.

Les alvéoles portant la partie aval de la structure stratifiée ont avantageusement des sections inférieures à celles des alvéoles portant la partie amont de la structure stratifiée.

La majeure partie des impacts de glace ayant lieu dans la partie aval de la structure stratifiée, il est préférable de réduire les sections des alvéoles portant la partie aval de la structure stratifiée afin que l'énergie libérée par les impacts de glace se répartisse sur un maximum d'alvéoles.

De façon classique, les alvéoles des extrémités amont et aval du support sont fermés par une couche d'une mousse de polymère.

Préférentiellement, les parties amont et aval de la structure stratifiée peuvent comprendre un empilement de 4 à 7 nappes de fibres et de 11 à 18 nappes de fibres, respectivement, et les nappes de fibres peuvent être des nappes de fibres de verre noyées dans une résine époxyde.

Le support rigide peut être en nid d'abeille et le panneau peut présenter une forme de secteur cylindrique ou conique.

L'invention concerne également une nacelle de turboréacteur, caractérisée en ce qu'elle comprend des panneaux de support d'abradable du type décrit ci-dessus.

La nacelle peut comprendre entre 4 et 6 panneaux de support d'abradable montés bout à bout.

L'invention concerne encore un turboréacteur d'avion, caractérisé en ce qu'il comprend des panneaux de support d'abradable du type décrit ci-dessus, disposés au droit des aubes de la soufflante de telle sorte que les parties aval des structures stratifiées de ces panneaux s'étendent en aval des aubes de la soufflante jusqu'à des panneaux d'insonorisation.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une demi-vue schématique en coupe axiale d'une soufflante d'un turboréacteur;
- la figure 2 est une vue schématique en coupe axiale d'un panneau protégeant le carter de soufflante, selon la technique antérieure ;
- la figure 3 est une vue schématique en coupe axiale d'un carter de soufflante comportant un panneau de support d'abradable selon l'invention ;
- la figure 4 est une vue schématique en coupe axiale d'un carter de soufflante comportant un panneau de support d'abradable selon une variante de l'invention ;
- la figure 5 est une vue schématique en coupe axiale d'un carter de soufflante comportant un panneau de support d'abradable selon une autre variante de l'invention.

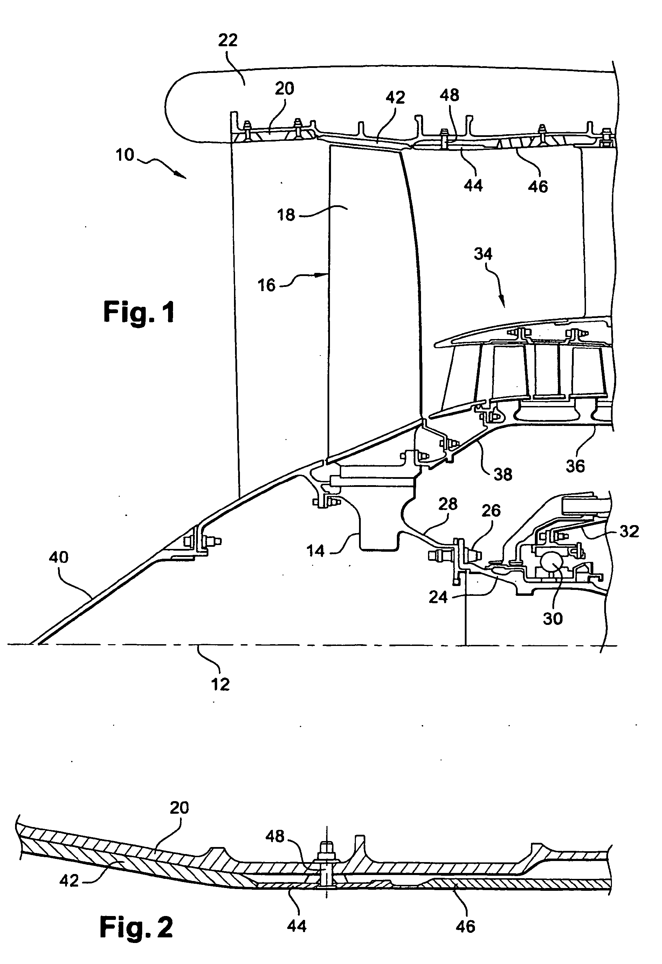

On se réfère d'abord à la figure 1 qui représente une soufflante 10 de turboréacteur d'axe 12, comprenant une roue formée d'un disque 14 portant à sa périphérie une pluralité d'aubes 16 dont les pieds sont engagés dans des rainures du disque 14 et dont les pales 18 s'étendent radialement vers l'extérieur en direction d'un carter 20 de soufflante portant une nacelle 22 entourant extérieurement les aubes 16. La roue de soufflante est entraînée en rotation autour de l'axe de la turbomachine 12 par un arbre 24 fixé par boulonnage 26 à une paroi tronconique 28 solidaire de la roue de soufflante. L'arbre 24 est supporté et guidé par un palier 30 lequel est porté par l'extrémité amont d'un support annulaire 32 fixé en aval à un carter intermédiaire (non représenté) disposé en aval d'un compresseur basse-pression 34 dont le rotor 36 est solidaire de la roue de soufflante par l'intermédiaire d'une paroi de liaison 38.

Un cône d'entrée 40 est monté à l'extrémité amont du turboréacteur afin de dévier le flux d'air entrant vers les aubes 16 de soufflante.

Le carter de soufflante 20 comprend sur une face interne un revêtement de matière abradable 42 disposé au droit des aubes 16 de soufflante et destiné à s'user lors d'un contact avec les extrémités radialement externes des aubes 16. Cette couche de matière abradable 42 permet de réduire les jeux entre les sommets des aubes 16 et le carter de soufflante 20 et ainsi d'optimiser les performances de la turbomachine.

Un panneau de protection 44 est monté en aval de la couche d'abradable 42 et est solidarisé à son extrémité aval avec un panneau d'insonorisation 46. Le panneau de protection 44 est fixé au carter 20 par l'intermédiaire de plots radiaux 48.

Lors du fonctionnement de la turbomachine, le givre accumulé à la surface du cône 40 et aux extrémités radialement internes des aubes 16 est éjecté dans la veine d'entrée d'air sous l'effet de la force centrifuge et entre en collision avec le panneau 44, qui protège le carter des impacts de glace. Les plots radiaux 48 permettent d'amortir une partie de l'énergie libérée par les impacts de glace.

Cependant, la réalisation en un seul bloc du panneau de protection 44 et du panneau d'insonorisation 46 s'avère compliquée et coûteuse pour les raisons précédemment évoquées.

De plus, pour les aubes à large corde, la zone d'impact s'étend non seulement en aval de l'abradable 42 mais également sur une partie de l'abradable 42 située au droit des aubes, et l'utilisation d'un panneau de protection 44 en aval de l'abradable 42 ne permet pas de protéger efficacement toute la zone du carter 20 soumise aux impacts de glace.

L'invention permet donc de remédier à ces problèmes ainsi qu'à ceux mentionnés plus haut en intégrant la protection contre les impacts de glace à un panneau de support de l'abradable.

Pour cela, une structure stratifiée 50 comprenant des nappes de fibres noyées dans un polymère recouvre la face interne d'un support rigide 52 fixé au carter de soufflante et comporte une partie amont 54 portant l'abradable 42 et une partie aval 56 s'étendant au-delà de l'abradable 42.

La partie amont 54 de la structure stratifiée 50 a une épaisseur constante sur la majeure partie de sa dimension axiale et est reliée à la partie aval 56 par une zone 57 dont l'épaisseur augmente progressivement vers l'aval. La partie aval 56 de la structure stratifiée 50 présente une épaisseur supérieure à celle de la partie amont 54 et constitue ainsi une couche de protection aux impacts de glace.

Le support rigide 52 présente une structure alvéolaire dont les extrémités amont et aval sont fermées par une couche de mousse 58 en polymère.

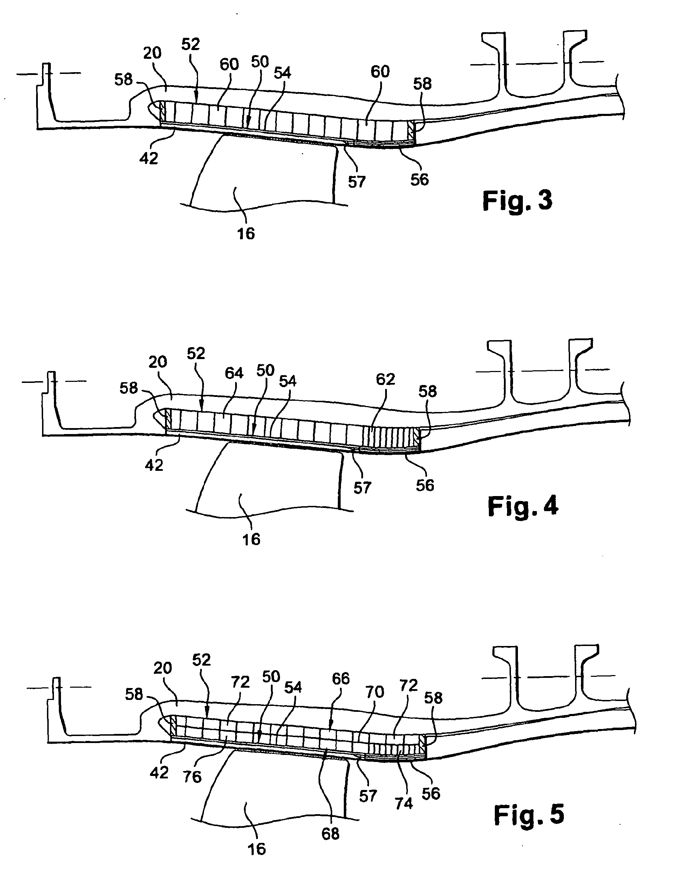

Cette structure alvéolaire peut avoir des alvéoles 60 de dimensions identiques sur toute sa longueur (figure 3).

En variante, les alvéoles 62 portant la partie aval 56 de la structure stratifiée 50 peuvent avoir des sections inférieures à celles des alvéoles 64 portant la partie amont 54 de la structure stratifiée 50. En effet, la majorité des impacts se situant dans la partie aval 56 de la structure stratifiée 50, il est préférable de diminuer la section des alvéoles portant la partie aval 56 de la structure stratifiée 50, afin que l'énergie d'un impact d'un morceau de glace soit transmise à un maximum d'alvéoles 62 (figure 4).

En figure 5 est représenté un support rigide 52 comprenant deux étages superposés à structure alvéolaire dont l'un radialement externe 66 est fixé au carter de soufflante 20 et l'autre radialement interne 68 porte la structure stratifiée 50. Les étages interne 68 et externe 66 sont séparés par une plaque 70. Les alvéoles 72 de l'étage radialement externe 66 ont tous la même section, tandis que les alvéoles 74 de l'étage radialement interne 68 qui sont fixés à la partie aval 56 de la structure stratifiée ont une section plus petite que celle des alvéoles 76 de ce même étage portant la partie amont 54 de la structure stratifiée.

D'autres types de support rigide 52 pourraient être utilisés pour supporter la structure stratifiée 50, tels que des mousses, par exemple. Cependant, une structure alvéolaire présente l'avantage de mieux transmettre l'énergie du choc d'un morceau de glace comparativement à une mousse où l'énergie libérée lors de l'impact reste concentrée localement.

En fonctionnement normal, l'utilisation d'une structure alvéolaire permet de combler facilement l'espace entre les extrémités radialement externes des aubes et le carter au lieu de combler cet espace uniquement avec de l'abradable.

Dans le cas où le jeu radial entre le carter 20 et les aubes 16 doit être important, par exemple de l'ordre de 25 à 50 mm, il est préférable de réaliser la structure alvéolaire 52 en deux étages afin que l'opérateur durant une opération de maintenance puisse remplacer seulement l'étage radialement interne.

Avantageusement, la structure alvéolaire 52 est une structure du type en nid d'abeille et les nappes de fibres sont des nappes de fibres de verre noyées dans une résine époxyde.

Dans un exemple pratique de réalisation de l'invention, les parties amont 54 et aval 56 de la structure stratifiée 50 comprennent un empilement de 4 à 7 nappes de fibres et un empilement de 11 à 18 nappes de fibres, respectivement, et la zone de transition d'épaisseur variable entre les parties amont 54 et aval 56 de la structure stratifiée 50 a une dimension axiale de 1 à 2 centimètres.

Le panneau de support d'abradable est réalisé en disposant plusieurs couches de nappes de fibres sur une structure alvéolaire 52 de manière à avoir une épaisseur plus importante à l'aval du panneau qu'à l'amont du panneau. Chaque nappe de fibres de verre ayant une orientation privilégiée de ses fibres constitutives, il est possible d'empiler les nappes de manière à ce que les fibres d'une nappe fassent un angle de 45° avec les fibres de la nappe supérieure ou inférieure. Cet agencement permet d'augmenter la rigidité de la couche stratifiée 50 après passage dans une étuve pour polymérisation et durcissement des nappes de fibres.

La face libre de la structure alvéolaire est ensuite collée sur une face interne du carter de soufflante 20 et la couche d'abradable 42 destinée à venir en contact avec les extrémités radialement externes des aubes 16 est appliquée sur la surface interne de la partie amont 54 de la structure stratifiée 50 à l'aide d'une spatule, par exemple, de manière à ce que l'extrémité aval de la couche d'abradable 42 soit en contact avec l'extrémité amont de la partie aval 56 de la structure stratifiée 50.

Le panneau peut être en forme de secteur cylindrique ou conique et la nacelle 22 peut comprendre entre 4 et 6 secteurs de panneaux montés bout à bout.

La dissociation du panneau d'insonorisation 46 aval et de la structure stratifiée 50 de protection contre les impacts de glace permet de simplifier et de diminuer les coûts de maintenance. Un tel panneau de support d'abradable permet en outre de protéger efficacement la majeure partie de la zone du carter qui est soumise aux impacts de glace grâce à l'évolution progressive de la structure stratifiée entre les parties amont 54 et aval 56.

## Revendications

1. Panneau de support d'abradable de turboréacteur, comprenant un support rigide (52) destiné à être fixé sur une paroi interne d'un carter de soufflante (20) et dont une face est recouverte d'une structure stratifiée (50) portant une couche de matière abradable (42), cette structure stratifiée (50) comprenant des nappes de fibres noyées dans un polymère, **caractérisé en ce que** la structure stratifiée (50) comprend une première partie ou partie amont (54) recouverte par l'abradable (42) et une seconde partie ou partie aval (56) qui s'étend au-delà de l'abradable (42), l'épaisseur de la partie aval (56) étant supérieure à celle de la partie amont (54) et étant susceptible de résister à des impacts de glace.

2. Panneau selon la revendication 1, **caractérisé en ce que** la partie amont (54) de la structure stratifiée (50) est d'épaisseur constante sur une majeure partie de sa longueur et est reliée à la partie aval (56) par une zone dont l'épaisseur augmente progressivement vers l'aval.

3. Panneau selon la revendication 2, **caractérisé en ce que** la partie amont (54) d'épaisseur constante s'étend sur environ les deux tiers de la dimension axiale de l'abradable (42).

4. Panneau selon l'une des revendications 1 à 3, **caractérisé en ce que** le support rigide (52) est à structure alvéolaire.

5. Panneau selon la revendication 4, **caractérisé en ce que** le support rigide (52) comprend deux étages (66, 68) superposés à structure alvéolaire, séparés par une plaque (70).

6. Panneau selon la revendication 4 ou 5, **caractérisé en ce que** les alvéoles (62, 74,) portant la partie aval (56) de la structure stratifiée (50) ont des sections inférieures à celles des alvéoles (64, 76) portant la partie amont (54) de la structure stratifiée (50).

7. Panneau selon l'une des revendications 4 à 6, **caractérisé en ce que** les alvéoles des extrémités amont et aval du support sont fermés par une couche d'une mousse de polymère (58).

8. Panneau selon l'une des revendications 1 à 7, **caractérisé en ce que** le support rigide (52) est en nid d'abeille.

9. Panneau selon l'une des revendications 1 à 8, **caractérisé en ce que** la partie amont (54) de la structure stratifiée (50) comprend un empilement de 4 à 7 nappes de fibres.

10. Panneau selon l'une des revendications précédentes, **caractérisé en ce que** la partie aval (56) de la structure stratifiée (50) comprend un empilement de 11 à 18 nappes de fibres.

11. Panneau selon l'une des revendications précédentes, **caractérisé en ce que** les nappes de fibres sont des nappes de fibres de verre noyées dans une résine époxyde.

12. Panneau selon l'une des revendications précédentes, **caractérisé en ce qu'**il est en forme de secteur cylindrique ou conique.

13. Nacelle de turboréacteur, **caractérisée en ce qu'**elle comprend des panneaux de support d'abradable selon l'une des revendications 1 à 12.

14. Nacelle selon la revendication 13, **caractérisée en ce qu'**elle comprend entre 4 et 6 panneaux montés bout à bout.

15. Turboréacteur d'avion, **caractérisé en ce qu'**il comprend des panneaux de support d'abradable selon l'une des revendications 1 à 12, disposés au droit des aubes (16) de la soufflante (10) de telle sorte que les parties aval (56) des structures stratifiées (50) de ces panneaux s'étendent en aval des aubes (16) de la soufflante jusqu'à des panneaux d'insonorisation.

## Claims

1. A panel for supporting abradable material in a turbojet, the panel comprising a rigid support (52) for fastening to an inside wall of a fan casing (20) and having one face covered in a laminated structure (50) carrying a layer of abradable material (42), the laminated structure (50) comprising sheets of fibers embedded in a polymer, the panel being **characterized in that** the laminated structure (50) comprises a first or upstream portion (54) covered by the abradable material (42) and a second or downstream portion (56) that extends beyond the abradable material (42), the thickness of the downstream portion (56) being greater than the thickness of the upstream portion (54) and being capable of withstanding ice impacts.

2. A panel according to claim 1, **characterized in that** the upstream portion (54) of the laminated structure (50) is of constant thickness over a major fraction of its length and is connected to the downstream portion (56) by a zone of thickness that increases progressively going downstream.

3. A panel according to claim 2, **characterized in that** the upstream portion (54) of constant thickness extends over about two-thirds of the axial extent of the abradable material (42).

4. A panel according to any one of claims 1 to 3, **characterized in that** the rigid support is of cellular structure.

5. A panel according to claim 4, **characterized in that** the rigid support (52) comprises two superposed layers of cellular structure (66, 68), separated by a plate (70).

6. A panel according to claim 4 or claim 5, **characterized in that** the cells (62, 74) carrying the downstream portion (56) of the laminated structure (50) are of smaller section than the cells (64, 76) carrying the upstream portion (54) of the laminated structure (50).

7. A panel according to any one of claims 4 to 6, **characterized in that** the cells at the upstream and downstream ends of the support are closed by a layer of polymer foam (58).

8. A panel according to any one of claims 1 to 7, **characterized in that** the rigid support (52) is of honeycomb structure.

9. A panel according to any one of claims 1 to 8, **characterized in that** the upstream portion (54) of the laminated structure (50) comprises a stack of four to seven sheets of fibers.

10. A panel according to any preceding claims, **characterized in that** the downstream portion (56) of the laminated structure (50) comprises a stack of 11 to 18 sheets of fibers.

11. A panel according to any preceding claim, **characterized in that** the sheets of fibers are sheets of glass fibers embedded in an epoxy resin.

12. A panel according to any preceding claim, **characterized in that** it is in the form of a cylindrical or conical sector.

13. A turbojet nacelle, **characterized in that** it includes panels according to any one of claim 1 to 12 for supporting abradable material.

14. A nacelle according to claim 13, **characterized in that** it includes four to six panels mounted end to end.

15. An airplane turbojet, **characterized in that** it includes panels according to any one of claim 1 to 12 for supporting abradable material, the panels being disposed in register with the blades (16) of the fan (10) in such a manner that the downstream portions (56) of the laminated structures (50) of said panels extend downstream from the fan blades (16) as far as soundproofing panels.

## Patentansprüche

1. Abriebschicht-Trägerplatte für Turbotriebwerke, bestehend aus einem starren Träger (52), der dazu vorgesehen ist, an einer Innenwand eines Gebläsegehäuses (20) befestigt zu werden, und dessen eine Seite mit einer Schichtstruktur (50) beschichtet ist, die eine Schicht aus abriebfähigem Werkstoff (42) trägt, wobei diese Schichtstruktur (50) in einem Polymer versenkte Fasergeflechte umfasst,
**dadurch gekennzeichnet,**
**dass** die Schichtstruktur (50) einen ersten Teil oder vorderen Teil (54) enthält, der mit dem abriebfähigen Werkstoff beschichtet ist, und einen zweiten Teil oder hinteren Teil (56) enthält, der sich über den abriebfähigen Werkstoff (42) hinaus erstreckt, wobei die Stärke des hinteren Teils (56) größer ist als die des vorderen Teils (54) und geeignet ist, dem Aufschlagen von Eisstücken standzuhalten.

2. Platte nach Anspruch 1,
**dadurch gekennzeichnet,**
**dass** der vordere Teil (54) der Schichtstruktur (50) über den größten Teil seiner Länge von gleich bleibender Stärke ist und mit dem hinteren Teil (56) durch einen Bereich verbunden ist, dessen Stärke nach hinten fortschreitend wächst.

3. Platte nach Anspruch 2,
**dadurch gekennzeichnet,**
**dass** sich der vordere Teil (54) mit gleich bleibender Stärke über ungefähr zwei Drittel der axialen Abmessung des abriebfähigen Werkstoffs (42) erstreckt.

4. Platte nach einem der Ansprüche 1 bis 3,
**dadurch gekennzeichnet,**
**dass** der starre Träger (52) ein zellenförmiger Aufbau ist.

5. Platte nach Anspruch 4,
**dadurch gekennzeichnet,**
**dass** der starre Träger (52) zwei übereinander liegend angeordnete Etagen (66, 68) mit zellenförmigem Aufbau enthält, die durch eine Platte (70) voneinander getrennt sind.

6. Platte nach Anspruch 4 oder 5,
**dadurch gekennzeichnet,**
**dass** die Zellen (62, 74), die den hinteren Teil (56) der Schichtstruktur (50) tragen, kleinere Unterteilungen haben als die der Zellen (64, 76), die den vorderen Teil (54) der Schichtstruktur (50) tragen.

7. Platte nach einem der Ansprüche 4 bis 6,
**dadurch gekennzeichnet,**
**dass** die Zellen des vorderen und des hinteren Endes des Trägers durch eine Schicht aus einem Polymerschaum (58) verschlossen sind.

8. Platte nach einem der Ansprüche 1 bis 7,
**dadurch gekennzeichnet,**
**dass** der starre Träger (52) wabenförmig ausgeführt ist.

9. Platte nach einem der Ansprüche 1 bis 8,
**dadurch gekennzeichnet,**
**dass** der vordere Teil (54) der Schichtstruktur (50) einen Stapel von 4 bis 7 Fasergeflechten umfasst.

10. Platte nach einem der vorherigen Ansprüche,
**dadurch gekennzeichnet,**
**dass** der hintere Teil (56) der Schichtstruktur (50) einen Stapel von 11 bis 18 Fasergeflechten umfasst.

11. Platte nach einem der vorherigen Ansprüche,
**dadurch gekennzeichnet,**
**dass** die Fasergeflechte Glasfasergeflechte sind, die in einem Epoxidharz versenkt sind.

12. Platte nach einem der vorherigen Ansprüche,
**dadurch gekennzeichnet,**
**dass** sie die Form eines zylindrischen oder konischen Sektors hat.

13. Gondel eines Turbotriebwerks,
**dadurch gekennzeichnet,**
**dass** sie Abriebschicht-Trägerplatten nach einem der Ansprüche 1 bis 12 aufweist.

14. Gondel nach Anspruch 13,
**dadurch gekennzeichnet,**
**dass** sie 4 bis 6 Platten aufweist, die mit den Enden aneinandergrenzend angebracht sind.

15. Flugzeug-Turbotriebwerk,
**dadurch gekennzeichnet,**
**dass** es Abriebschicht-Trägerplatten nach einem der Ansprüche 1 bis 12 aufweist, die in Verlängerung vor den Schaufeln (16) des Gebläses (10) dergestalt angeordnet sind, dass sich die hinteren Teile (56) der Schichtstrukturen (50) dieser Platten hinter den Gebläseschaufeln (16) bis hin zu Schalldämmungsplatten erstrecken.
